# EUROPÄISCHE PATENTSCHRIFT

(11) **EP 0 616 137 B1**
(45) Veröffentlichungstag und Bekanntmachung des Hinweises auf die Patenterteilung: **11.09.1996**
(21) Anmeldenummer: 94103972.9
(22) Anmeldetag: 15.03.1994
(51) Int. Cl.: F16B 12/20, F16B 12/10

(54) **Spannbolzen für einen Möbelverbindungsbeschlag**
Pulling bolt for a jointing of furniture fitting
Boulon de tension pour fournitures pour meubles

(30) Priorität: 17.03.1993 DE 4308465
(43) Veröffentlichungstag der Anmeldung: 21.09.1994
(73) Patentinhaber: Adolf Würth GmbH & Co. KG, D-74653 Künzelsau (DE)
(72) Erfinder: Humm, Siegfried, D-74214 Schöntal-Westernhausen (DE); Palosi, Gabor, D-74613 Öhringen-Büttelbronn (DE)
(74) Vertreter: Patentanwälte Ruff, Beier, Schöndorf und Mütschele

(56) Entgegenhaltungen:
- EP-A- 0 180 965
- DE-A- 2 512 444
- DE-A- 3 009 380
- DE-A- 4 110 809
- DE-U- 8 717 482

## Beschreibung

Die Erfindung geht aus von einem Spannbolzen für einen Möbelverbindungsbeschlag, insbesondere für einen Systemverbinder.

Bei einem bekannten Möbelverbindungsbeschlag (DE-PS 30 09 380) wird in eine Bohrung in dem einen zu verbindenden Möbelteil ein Spannbolzen eingeschraubt, der einstückig etwa die Form einer Schraube aufweist. Sein Schaft enthält jedoch einen zwischen dem Schraubenkopf und dem Gewindeabschnitt enthaltenen zylindrischen Abschnitt vergrößerten Durchmessers, der als Anschlagsbegrenzung für das Einschrauben des Bolzens dient. Der Verbindungsbeschlag greift an der Unterseite des Schraubenkopfes einseitig an. Zum Festziehen des Verbindungsbeschlags erfolgt eine Drehung eines exzentrisch gelagerten Teils, wobei die Drehung um fast einen vollständigen Umfang erfolgen kann.

Weiterhin bekannt ist ein Möbelverbindungsbeschlag (DE-OS 41 10 809), bei dem der Spannbolzen einen Kopf mit einer abgerundeten Unterseite aufweist, an der beidseits ein geschlitzter exzentrisch gelagerter Hebel angreift.

Bei Möbelverbindungsbeschlägen dieser Art besteht das Problem, daß Toleranzen sowohl bei der Herstellung der Verbindungsbeschläge als auch bei der Anbringung der Bohrungen auftreten. Diese Toleranzen mußten bislang von der excentrisch verlaufenden Fläche des Möbelbeschlags aufgenommen werden. Dies spielt dort, wo man einen sehr großen Verstellweg hat und es nicht darauf ankommt, wie weit das Betätigungselement angezogen werden soll, nur eine untergeordnete Rolle. Verwendet man jedoch Möbelverbindungsbeschläge, bei denen das Exzenterelement in angezogenem Zustand in einer bestimmten Stellung liegen soll, so können die Toleranzen dazu führen, daß unter Umständen entweder die Verbindung nicht ausreichend angezogen ist oder aber das Exzenterelement nicht in seine gewünschte Endstellung gebracht werden kann..

Der Erfindung liegt die Aufgabe zugrunde, einen Spannbolzen für einen Möbelverbindungsbeschlag zu schaffen, insbesondere für einen Möbelverbindungsbeschlag, wie er in DE-OS 41 10 809 beschrieben ist, mit dessen Hilfe es möglich wird, auch bei vorhandenen Toleranzen eine ausreichende Befestigung und ein korrektes Positionieren des Betätigungselements des Verbindungsbeschlags sicherzustellen.

Zur Lösung dieser Aufgabe schlägt die Erfindung einen Spannbolzen mit den Merkmalen des Anspruchs 1 vor. Weiterbildungen der Erfindung sind Gegenstand der Unteransprüche.

Die Nachgiebigkeit des Bolzenkopfs bzw. die Federwirkung des Spannbolzens liegt in einem sehr niedrigen Bereich, beispielsweise von 0,5 mm. Die Spannkraft der Federwirkung wird so gewählt, daß bei nicht nachgebendem Spannbolzen die Befestigungskraft ausreichend ist. Die Nachgiebigkeit wird also nur dann beansprucht, wenn bei einer schon festen Verbindung zwischen den beiden Möbelteilen das Betätigungselement für den Exzenter noch nicht in die Endstellung bewegt werden konnte, in die es gehört. Nur in diesem Fall wirkt also die Nachgiebigkeit, so daß dann das Betätigungselement in die gewünschte Stellung gebracht werden kann.

Die Erfindung schlägt in Weiterbildung vor, daß das Befestigungselement einen mit einem Außengewinde versehenen Abschnitt zum Einschrauben in eine Bohrung in dem Möbelteil aufweist. In diesem Fall wird der Spannbolzen also genau so gehandhabt wie die bekannten Spannbolzen.

In Weiterbildung der Erfindung kann vorgesehen sein, daß das Befestigungselement eine Hülse aufweist bzw. als Hülse ausgebildet ist.

Erfindungsgemäß kann in nochmaliger Weiterbildung der Erfindung der Spannbolzen einen Schaft aufweisen, an dessen Ende der Bolzenkopf ausgebildet ist, insbesondere einstückig ausgebildet. Der Schaft kann die Hülse des Befestigungselements durchsetzen.

Zur Herstellung der Nachgiebigkeit kann beispielsweise vorgesehen sein, daß an dem Schaft ein Anschlag gebildet ist und zwischen diesem Anschlag und dem Befestigungselement eine Feder angeordnet ist, insbesondere eine auf Druck beanspruchte Feder. Beispielsweise kann man als Feder eine Tellerfeder oder ein Tellerfederpaket verwenden. Diese können von dem Schaft durchsetzt sein, so daß die erforderlichen Abmessungen sehr klein ausfallen können.

Der Anschlg kann insbesondere von einem Nietkopf am Schaftende gebildet sein.

Das Federelement kann aber auch mit Vorteil von einem Ring aus einem elastischen Material gebildet sein, der ähnlich wirkt wie ein Tellerfederpaket.

Die Erfindung schlägt in Weiterbildung vor, daß das Befestigungselement selbst aus nachgiebigem Material bestehen kann. Dann ist kein zusätzliches Federelement erforderlich.

Die Erfindung schlägt vor, daß der Bolzenkopf derart angebracht bzw. angeordnet sein kann, daß seine Nachgiebigkeit durch eine Druckbeanspruchung eines nachgiebigen Elements bewirkt wird. Die Beanspruchung auf Druck hat den Vortei, daß keine Einbußen bei der Haltbarkeit des Elements auftreten.

In nochmals weiterer Ausgestaltung kann vorgesehen sein, daß der Bolzenkopf drehfest mit dem Befestigungselement verbunden ist. Dies kann beispielsweise dadurch geschehen, daß der Bolzenkopf an einem im Querschnitt mehrkantigen Schaft ausgebildet ist, der eine entsprechend ausgebildete Hülse durchsetzt.

Auf diese Weise läßt sich der Spannbolzen in ähnlicher Weise wie die bekannten Spannbolzen einschrauben, d.h. durch Angreifen an dem Bolzenkopf selbst. Dieser kann, wie von der Erfindung ebenfalls vorgeschlagen wird, einen Schraubenantrieb aufweisen, beispielsweise eine Antriebsausbildung.

Die Nachgiebigkeit des Spannbolzens kann, wie die Erfindung vorschlägt, durch Auswahl und/oder Anordnung des Materials an das dem Bolzenkopf gegenüberliegende Ende des Befestigungselements gelegt werden. Dies führt zu der gewünschten Druckbeanspruchung des verformten Materials.

Die Nachgiebigkeit kann an diesem Ende beispielsweise dadurch verbessert werden, daß durch Querschnittsverminderungen, Stege o.dgl. das Material geschwächt ist.

Erfindungsgemäß ist der Spannbolzen im wesentlichen rotationssymmetrisch zur Längsachse ausgebildet.

Weitere Merkmale, Einzelheiten und Vorzüge der Erfindung ergeben sich aus der folgenden Beschreibung bevorzugter Ausführungsformen der Erfindung sowie anhand der Zeichnung. Hiebei zeigen:
- Fig.1: eine teilweise geschnittene Darstellung einer ersten Ausführungsform des Spannbolzens nach der Erfindung;
- Fig.2: eine der Fig. 1 entsprechende Darstellung bei einer zweiten Ausführungsform.

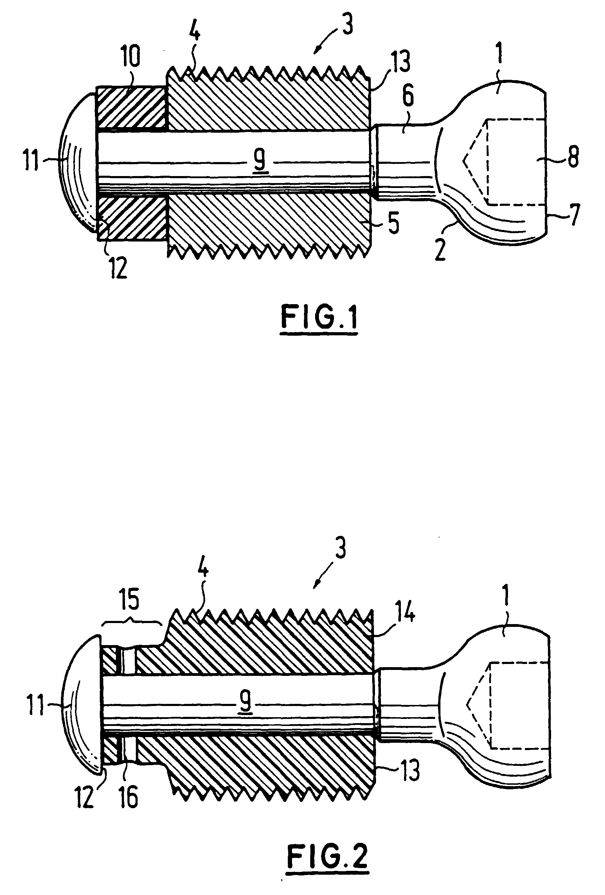

Der in Fig. 1 dargestellte Spannbolzen enthält einen Spannbolzenkopf 1, der eine etwa kugelförmig abgerundete Unterseite 2 aufweist. Der Spannbolzen enthält weiterhin ein Befestigungselement 3, das mit einem Außengewinde 4 versehen ist. In der dargestellten Ausführungsform ist das Befestigungselement als Hülse 5 mit einer durchgehenden Innenöffnung ausgebildet. Die Innenbohrung weist einen beispielsweise quadratischen Querschnitt auf.

Unterhalb der Unterseite 2 des Bolzenkopfs 1 ist ein zylindrischer Abschnitt 6 mit kreisförmigem Querschnitt ausgebildet, der einen Abschnitt verringerten Durchmessers bildet. Dadurch wird der Zugriff eines Spannelements an der Unterseite 2 des Bolzenkopfs 1 möglich.

Die dem Befestigungselement 3 abgewandte Vorderseite 7 des Bolzenkopfs 1, die im dargestellten Beispiel eben ausgebildet ist, enthält eine Antriebsvertiefung 8. Hier kann es sich um eine der üblichen Antriebsvertiefungen in Form eines Sechsecks oder ähnlicher bekannter Formen handeln.

Der Bolzenkopf 1 ist über den Abschnitt 6 an dem Ende eines im Querschnitt quadratischen Schafts 9 ausgebildet, wobei der Schaft 9, der Abschnitt 6 und der Bolzenkopf 1 einstückig sind.

Auf der dem Bolzenkopf 1 gegenüberliegenden Seite des Befestigungselements 3 ist um den Schaft 9 herum ein ringförmiges Federelement 10 aus nachgiebigem Material herumgelegt. Das durch das Federelement 10 hindurchragende Ende des Schaftes 9 ist zu einem Nietkopf 11 geformt. Die Unterseite 12 bildet einen Anschlag für das Federelement 10, das also zwischen dem Nietkopf 11 und dem Befestigungselement 3 eingeschlossen ist.

Das in Fig. 1 dargestellte Befestigungselement wird in eine Bohrung in einem der beiden zu verbindenden Möbelteile eingeschraubt. Zum Einschrauben dient die Antriebsvertiefung 8, da der Schaft 9 drehfest mit dem Befestigungselement 3 verbunden ist. Der Spannbolzen wird also in das Loch so weit eingeschraubt, bis die Vorderseite 13 des Befestigungselements 3 bündig mit der Oberfläche des Möbelteils verläuft. In diesem Zusatand weist die Unterseite 2 des Bolzenkopfs 1 von der Fläche des Möbelteils den normalen Abstand auf, wie er von dem Verbindungsbeschlag benötigt wird. Dieser Verbindungsbeschlag greift nun bei seinem Schließen an der Unterseite 2 des Bolzenkopfs 1 an. Der Einfachheit halber wird hierzu auf die eingangs genannte DE-OS 41 10 809 verwiesen. Stellt sich nun heraus, daß der Verbindungsbeschlag nicht vollständig geschlossen werden kann, obwohl die Spannung bereits ausreichend ist, so läßt sich der Kopf 1 etwas aus dem Möbelteil herausziehen, indem das Federelement 10 etwas nachgibt. Dabei ist die Elastizitätskonstante und die Abmessung des Federelements 10 so gewählt, daß bei der normalen zum Verbinden der beiden Möbelteile erforderlichen Spannkraft der Bolzenkopf 1 noch nicht herausgezogen wird. Erst dann, wenn die Zugkraft größer wird, erfolgt ein Herausziehen des Bolzenkopfs 1.

Fig. 2 zeigt eine Ausführungsform, bei der das Befestigungselement die Form einer Hülse 14 aufweist, die in diesem Fall einstückig aus Kunststoff besteht, und zwar einem Kunststoff mit einer ihm inhärenten gewissen Nachgiebigkeit. Die Hülse 14 enthält einen von der Vorderseite 13 ausgehenden Abschnitt mit einem Außengewinde, der nach Einschrauben in der Bohrung in der Bohrung bleibt und sich aufgrund des Eingreifens des Gewindes 4 in die Bohrungswandung nicht verformt. Auf der dem Bolzenkopf 1 abgewandten Seite verringert die Hülse 14 ihren Durchmesser und bildet einen Abschnitt 15, in dem die Hülse 14 nicht mehr in die Bohrungswandung eingreift. Aufgrund des verringerten Durchmessers ist hier auch ein verringerter Materialquerschnitt gegeben. Zusätzlich sind in diesen Abschnitt 15 einige radial verlaufende Öffnungen bzw. Durchbrüche 16 eingebracht, die dazu führen, daß zwischen den Durchbrüchen 16 Stege stehen bleiben. Dies führt nochmals zu einer Materialschwächung bzw. Verminderung, so daß bei einer Zugbeanspruchung des Bolzenkopfs 1 der Abschnitt 15 insgesamt etwa die gleichen Federungseigenschaften aufweist wie der Federring 10 der Ausführungsform nach Fig. 1.

## Patentansprüche

1. Spannbolzen für einen Möbelverbindungsbeschlag, insbesondere einen Systemverbinder, mit
1.1 einem Befestigungselement (3) zur Befestigung des Spannbolzens an dem einen zu verbindenden Möbelteil,
1.2 einem Bolzenkopf (1), der
1.2.1 auf der dem anderen Möbelteil zugewandten Seite des Befestigungselements (3) angeordnet und
1.2.2 von diesem durch einen Abschnitt (6) getrennt ist, der
1.2.3 in mindestens einer Richtung eine gegenüber dem Bolzenkopf verringerte Querabmessung aufweist, wobei
1.3 der Bolzenkopf (1) in Spannrichtung des Verbindungsbeschlags nachgiebig an dem Befestigungselement gehaltert ist.

2. Spannbolzen nach Anspruch 1, bei dem das Befestigungselement (3) einen mit einem Außengewinde (4) versehenen Abschnitt zum Einschrauben in eine Bohrung in dem Möbelteil aufweist.

3. Spannbolzen nach Anspruch 1 oder 2, bei dem das Befestigungselement (3) eine Hülse (5, 14) aufweist bzw. als Hülse (5, 14) ausgebildet ist.

4. Spannbolzen nach einem der vorhergehenden Ansprüche mit einem Schaft (9), an dessen Ende der Bolzenkopf (1) ausgebildet ist.

5. Spannbolzen nach Anspruch 4, bei dem der Schaft (9) die Hülse (5, 14) durchsetzt.

6. Spannbolzen nach Anspruch 4 oder 5, bei dem zwischen einem an dem Schaft (9) gebildeten Anschlag und dem Befestigungselement (3) eine Feder angeordnet ist, insbesondere eine Druckfeder.

7. Spannbolzen nach Anspruch 6, bei dem der Anschlag von einem Nietkopf (11) am Ende des Schafts (9) gebildet ist.

8. Spannbolzen nach einem der vorhergehenden Ansprüche, bei dem das Befestigungselement (3) aus nachgiebigem Material besteht.

9. Spannbolzen nach einem der vorhergehenden Ansprüche, bei dem der Bolzenkopf (1) derart angebracht ist, daß die Nachgiebigkeit durch eine Druckbeanspruchung bewirkt wird.

10. Spannbolzen nach einem der vorhergehenden Ansprüche, bei dem der Bolzenkopf (1) drehfest mit dem Befestigungselement (3) verbunden ist.

11. Spannbolzen nach einem der vorhergehenden Ansprüche, bei dem der Bolzenkopf (1) in seiner dem Befestigungselement (3) abgewandten Endfläche (7) eine Antriebsausbildung (8) aufweist.

12. Spannbolzen nach einem der vorhergehenden Ansprüche, bei dem die Nachgiebigkeit durch Materialauswahl und/oder Anordnung des Materials an das dem Bolzenkopf (1) gegenüberliegende Ende des Befestigungselements (3) gelegt ist.

13. Spannbolzen nach einem der vorhergehenden Ansprüche, der im wesentlichen rotationssymmetrisch zur Längsachse ausgebildet ist.

14. Spannbolzen nach einem der vorhergehenden Ansprüche, bei dem die Nachgiebigkeit so ausgebildet ist, daß bei einer zum Verbinden der beiden Möbelteile erforderlichen Spannkraft noch keine Nachgiebigkeit erfolgt.

## Claims

1. Clamping bolt for a furniture joining fitting, particularly a system connector, with
1.1 a fixing element (3) for fixing the clamping bolt to one furniture part to be joined,
1.2 a bolt head (1), which
1.2.1 is located on the side of the fixing element (3) facing the other furniture part and
1.2.2 is separated from the latter by a portion (6), which
1.2.3 has in at least one direction a transverse dimension reduced compared with the bolt head, in which
1.3 in the tensioning direction of the joining fitting the bolt head (1) is resiliently held on the fixing element.

2. Clamping bolt according to claim 2, in which the fixing element (3) has a portion provided with an external thread (4) for screwing into a bore in the furniture part.

3. Clamping bolt according to claim 1 or 2, in which the fixing element (3) has a sleeve (5, 14) or is constructed as a sleeve (5, 14).

4. Clamping bolt according to one of the preceding claims with a shank (9), on whose end is formed the bolt head (1).

5. Clamping bolt according to claim 4, in which the shank (9) traverses the sleeve (5, 14).

6. Clamping bolt according to claim 4 or 5, in which between a stop formed on the shank (9) and the fixing element (3) a spring is located, in particular in the form of a compression spring.

7. Clamping bolt according to claim 6, in which the stop is formed by a rivet head (11) at the end of the shank (9).

8. Clamping bolt according to one of the preceding claims, in which the fixing element (3) is made from resilient material.

9. Clamping bolt according to one of the preceding claims, in which the bolt head (1) is fitted in such a way that the resilience is brought about by compressive loading.

10. Clamping bolt according to one of the preceding claims, in which the bolt head (1) is connected in non-rotary manner to the fixing element (3).

11. Clamping bolt according to one of the preceding claims, in which the bolt head (1) has a drive construction (8) in its end face (7) remote from the fixing element (3).

12. Clamping bolt according to one of the preceding claims, in which the resilience is positioned by material selection and/or placing the material at the end of the fixing element (3) opposite to the bolt head (1).

13. Clamping bolt according to one of the preceding claims, which is substantially rotationally symmetrical to the longitudinal axis.

14. Clamping bolt according to one of the preceding claims, wherein the resilience is such that no resilience occurs in the case of a tensile force necessary for joining the two furniture parts.

## Revendications

1. Boulon de serrage pour une ferrure d'assemblage de meubles, en particulier un raccord de système, comportant:
1.1 un élément de fixation (3), pour la fixation du boulon de serrage sur une des parties de meuble à assembler,
1.2 une tête de boulon (1), qui
1.2.1 est disposée sur le côté de l'élément de fixation (3) qui est tourné vers l'autre partie de meuble, et
1.2.2 est séparée de celui-ci par un tronçon (6), qui
1.2.3 présente dans au moins une direction une dimension transversale réduite par rapport à celle celle de la tête du boulon, tandis que
1.3 la tête du boulon (1) est maintenue sur l'élément de fixation de manière souple dans la direction du serrage de la ferrure d'assemblage.

2. Boulon de serrage selon la revendication 1, dans lequel l'élément de fixation (3) présente un tronçon doté d'un filet extérieur (4), pour le vissage dans un alésage pratiqué dans la partie de meuble.

3. Boulon de serrage selon la revendication 1 ou 2, dans lequel l'élément de fixation (3) présente un manchon (5, 14) ou est configuré comme manchon (5, 14).

4. Boulon de serrage selon l'une des revendications précédentes, comportant une tige (9) à l'extrémité de laquelle est formée la tête de boulon (1).

5. Boulon de serrage selon la revendication 4, dans lequel la tige (9) traverse le manchon (5, 14).

6. Boulon de serrage selon la revendication 4 ou 5, dans lequel un ressort, en particulier un ressort de compression est disposé entre une butée formée sur la tige (9) et l'élément de fixation (3).

7. Boulon de serrage selon la revendication 6, dans lequel la butée est formée par une tête de rivet (11) disposée à l'extrémité de la tige (9).

8. Boulon de serrage selon l'une des revendications précédentes, dans lequel l'élément de fixation (3) est constitué d'un matériau souple.

9. Boulon de serrage selon l'une des revendications précédentes, dans lequel la tête de boulon (1) est disposée de telle sorte que la souplesse est obtenue par une contrainte de compression.

10. Boulon de serrage selon l'une des revendications précédentes, dans lequel la tête de boulon (1) est reliée rotation solidaire à l'élément de fixation (3).

11. Boulon de serrage selon l'une des revendications précédentes, dans lequel la tête de boulon (1) présente dans sa surface d'extrémité (7) éloignée de l'élément de fixation (3) une configuration (8) permettant l'entraînement.

12. Boulon de serrage selon l'une des revendications précédentes, dans lequel la souplesse est déterminée par le choix du matériau et/ou l'agencement du matériau à l'extrémité de l'élément de fixation (3) qui est éloignée de la tête de boulon (1).

13. Boulon de serrage selon l'une des revendications précédentes, qui est configuré essentiellement à symétrie de rotation par rapport à l'axe longitudinal.

14. Boulon de serrage selon l'une des revendications précédentes, dans lequel la souplesse est réalisée de telle sorte qu'il n'existe encore aucune souplesse pour une force de serrage nécessaire pour l'assemblage des deux parties de meuble.
